# EUROPEAN PATENT APPLICATION

(11) **EP 4 563 304 A1**
(43) Date of publication of application: **04.06.2025**
(21) Application number: 23213560.8
(22) Date of filing: 30.11.2023
(51) Int. Cl.: B25J 15/06

(54) **ULTRALIGHT PNEUMATIC AND MECHANICAL GRIPPER**

(71) Applicant: Przedsiebiorstwo Produkcyjno Handlowo Uslugowe Pablo Spolka z Ograniczona, 26-065 Piekoszów (PL)
(72) Inventor: Pazdzierz, Pawel, 26-065 Piekoszów (PL)
(74) Representative: JD&P Patent Attorneys Joanna Dargiewicz & Partners

(57) **Abstract**

The object of the present invention relates to an ultralight pneumatic-mechanical gripper, characterised in that it comprises a gripper body (A), to which is attached a gripper actuator (B); a package stabiliser (C); gripper arm (D); a gripper crosshead (E), coupling the gripper actuator (B) to the gripper arm (D); a bellows suction cup (F); mini plug connectors (G) and L plug connectors (H); a gripper fastener (I) and an adapter (J).

## Description

The present invention relates to an ultralight pneumatic-mechanical gripper for a robot effector for depalletizing packaging.

The process of depalletizing packaging involves lining up empty containers, such as bottles or glass packaging, on a production line. Existing methods use systems based on Cartesian structures or, in more modern approaches, rely on industrial robots. Unfortunately, existing solutions have low accuracy and repeatability, making it difficult to position containers on the line at increased depalletization speeds.

In current implementations, the depalletization speed is around 1 m/s, with an accuracy of 0.01 mm. In an effort to achieve a speed of 2.5 m/s while maintaining high accuracy, it is necessary to increase the speed to achieve an efficiency of 4,000 pieces per hour. To solve this challenge, an ultralight pneumatic-mechanical gripper has been developed as part of the robot's effector. The use of the robot will allow a significant increase in the dynamics of the depalletization process, which will benefit the entire production operation.

The object of the present invention was to develop an ultralight pneumatic-mechanical gripper for a robot effector that will enable the orientation of the product in XYZ space in order to increase the dynamic movements, accuracy and optimisation of the movement trajectory, which will translate into increased machine productivity.

This objective has been achieved by the subject of the present invention.

Thus, an object of the present invention is an ultralight pneumatic-mechanical gripper, which comprises
- a gripper body, to which a gripper actuator is attached, responsible for a rotary movement of the gripping part;
- a package stabiliser, which ensures stability of a package during gripping;
- a gripper arm, which performs a 0-90° rotation movement, allowing efficient gripping of bottles;
- a gripper crosshead, which couples the gripper actuator to the gripper arm;
- mini plug-in connectors and L plug-in connectors, necessary for the power supply of the gripper, by connecting them to a pneumatic network;
- a gripper clamp, which is an attachment mechanism, which allows easy and safe removal of the package stabiliser together with the gripper;
- an adapter, which acts as an intermediate between the crosshead and the gripper arm, thus ensuring 0-90° rotation of the gripper arm.

The subject of the invention is depicted in the figures of the drawing, where:
Fig. 1a and 1b show a view of an ultralight pneumatic-mechanical gripper in perspective view;
Fig. 2 shows a cross-sectional view of an ultralight pneumatic-mechanical gripper.

The use of an ultralight pneumatic-mechanical gripper for the robot effector increases the efficiency of the entire packaging process. An effector equipped with such a gripper is characterised by increased dynamic movements, accurate precision and positioning repeatability. The present invention, under suitably favourable conditions and processes, makes it possible to make a machine using a robot with a lower maximum load capacity, and will thus significantly reduce the cost of manufacturing the line.

The use of an ultralight pneumatic-mechanical gripper for the robot effector according to the present invention speeds up the technological process and contributes to lower operating costs for the customer. The capacity of the system for depalletizing containers of different sizes is 4,000 pieces/hr. Compared to currently used systems, the capacity has increased from 3,400 pieces/hr to 4,000 pieces/hr. The speed of movement of the effector with such a gripper is 2.5 m/s with a product positioning accuracy of 0.01 mm.

### ULTRALIGHT PNEUMATIC-MECHANICAL GRIPPER - GENERAL DESCRIPTION

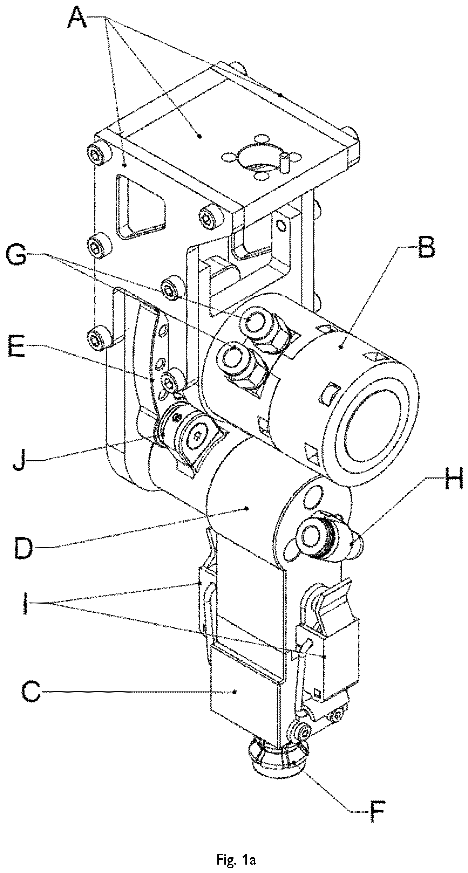

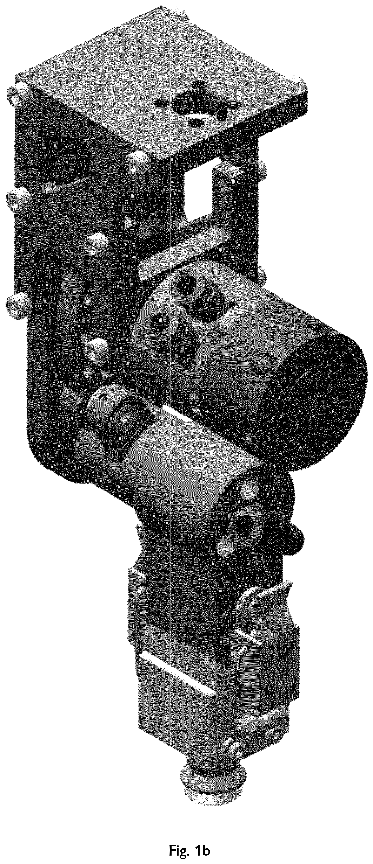

Fig. 1a shows a perspective view of an ultralight pneumatic-mechanical gripper. The gripper housing consists of several key components, each of which plays an important role in the proper functioning of the device.

First, we have a gripper body (A), which is the main structure, and to which a gripper actuator (B) is attached. It is the actuator which is responsible for a rotational movement of the gripping part. To ensure the stability of the package during gripping, a package stabiliser (C) is introduced.

A gripper arm (D) is the key part that performs a 0-90° rotational movement, enabling efficient gripping of bottles. A gripper crosshead (E) couples the gripper actuator (B) to the gripper arm (D). A bellows suction cup (F) is another essential component for effective gripping of various bottles.

Mini plug-in connectors (G) and L plug-in connectors (H) are necessary to power the gripper by connecting them to a pneumatic network. A gripper fastener (I) is an attachment mechanism that allows the package stabiliser (C) to be easily and safely removed together with the gripper.

An adapter (J) acts as an intermediary between the crosshead and the gripper arm, thus ensuring 0-90° rotation of the gripper arm. Due to the integrated components, the entire gripper design creates a complete solution for the efficient and precise gripping of bottles (packages).

### ULTRALIGHT PNEUMATIC-MECHANICAL GRIPPER - DETAILED DESCRIPTION

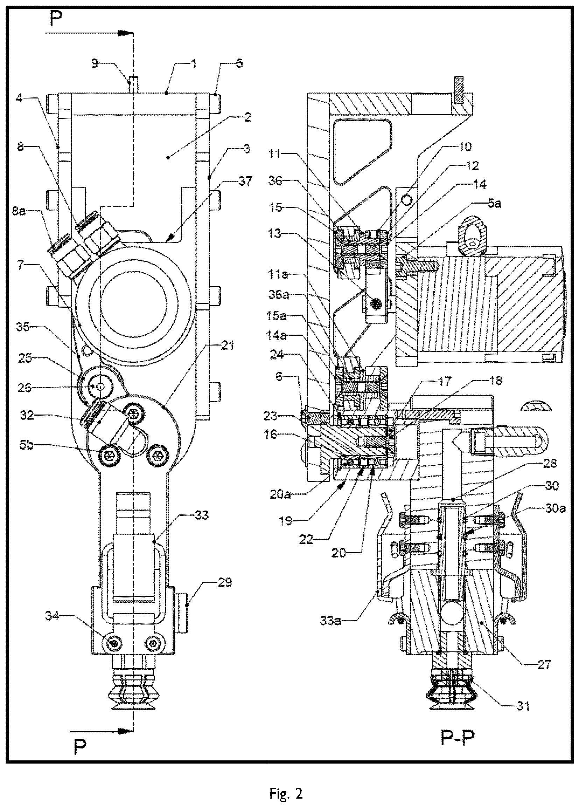

Fig. 2 shows a cross-sectional view of the ultralight pneumatic-mechanical gripper. The gripper housing consists of various components, each of which plays an important role in the proper functioning of the device. At the top of the housing is a K1 plate (1), connected to plates (2, 3, 4) that together form the body. The K1 plate is the component that connects the gripper to the robot.

Allen screws (5, 5a and 5b) and lenticular screws (6) are used to fasten the components. The rotary actuator (7) is located at the bottom of the housing, connected to an actuator mounting plate (37). The mini plug-in connectors (8 and 8a) are used to supply power to the actuator via the pneumatic network, thus supplying power to the gripper. The parts of the gripper mechanism, such as a hardened cylindrical pin (9), are responsible for stabilising the gripper with the robot, and parts of the mechanism, such as an intermediate cam (10), are responsible for transmitting the rotary movement of the actuator to the gripper arm.

A pin (11 and 11a) is an intermediate element for transmitting the rotational movement to the intermediate cam (10) and a main cam (35), by working in a sliding sleeve (36 and 36a), while washers (12,15, 15a, 17, 25) distribute the pressure forces evenly. A clamping screw (13) and tapered screws (14, 14a, 18, 26) lock the components in place, ensuring stability. A gripper axle shaft (16) is a part of the gripper mechanism, allowing rotational movement.

The rotary adapter (19), in combination with ball bearings (20 and 20a), allow the gripper arm to rotate. A connection base (21), a larger ring (22), a smaller ring (23) and an internal snap ring (24) serve to seat the rotary adapter. The package stabiliser (27) stabilises the package during gripping and a package stabiliser connection ferrule (28) is an intermediate element between the stabiliser (27) and the connection base (21). A stabiliser cap (29) protects against dust, and a silicone o-ring (30 and 30a) acts as a seal. The bellows suction cup (31) is used to grip packages and the L-plug-in connector (32) for a vacuum pump. A stabiliser hook fastener (33 and 33a), allen screws (34), are parts of the mechanism for stabilising the gripper during its operation.

## Claims

1. An ultralight pneumatic-mechanical gripper, **characterized in that** it comprises
- a gripper body (A), to which a gripper actuator (B) is attached, which is responsible for a rotary movement of the gripping part;
- a package stabiliser (C), which ensures stability of a package during gripping;
- a gripper arm (D), which performs a 0-90° rotation movement, allowing efficient gripping of bottles;
- a gripper crosshead (E), which couples the gripper actuator (B) to the gripper arm (D);
- a bellows suction cup (F) for effective gripping of different bottles;
- mini plug-in connectors (G) and L plug-in connectors (H), necessary for the power supply of the gripper, by connecting them to a pneumatic network;
- a gripper clamp (I), which is an attachment mechanism that allows easy and safe removal of the package stabiliser (C) together with the gripper;
- an adapter (J), which acts as an intermediate between the crosshead (E) and the gripper arm (D), thus ensuring 0-90° rotation of the gripper arm (D).
